# EUROPÄISCHE PATENTANMELDUNG

(11) **EP 0 755 140 A2**
(43) Veröffentlichungstag der Anmeldung: **22.01.1997**
(21) Anmeldenummer: 96110288.6
(22) Anmeldetag: 26.06.1996
(51) Int. Cl.: H04L 25/02

(54) **Einrichtung und Verfahren zum Übertragen von digitalisierten Signalen zwischen zwei mit unterschiedlichen Taktfrequenzen arbeitenden Übertragungssystemen**

(30) Priorität: 19.07.1995 DE 19526332
(71) Anmelder: ALCATEL N.V., NL-2288 BH Rijswijk (NL)
(72) Erfinder: Wolf, Michael, 74395 Mundelsheim (DE)
(74) Vertreter: Schätzle, Albin, Dipl.-Phys.

(57) **Zusammenfassung**

Bei der Übertragung von digitalisierten Signalen von einem digitalen Übertragungssystem (NET1), z.B. PDH-System in ein anderes digitales Übertragungssystem (NET2), z.B. SDH-System, die mit unterschiedlichen Taktfrequenzen (f₁, f₂) arbeiten, muß beim Übergang eine Taktanpassung erfolgen. Die digitalisierten Signale werden dazu in einer Dekodiereinheit (D1) gesteuert mit der Taktfrequenz (f₁) des einen digitalen Übertragungssystems (NET1) in zeit- und wertediskrete Signale umgesetzt. In einer Umsetzeinheit (UE1) werden die zeit- und wertediskreten Signale in weitere zeit- und wertediskrete Signale umgesetzt, deren Impulsfolgefrequenz an eine aus der Taktfrequenz (f₂) des anderen digitalen Übertragungssystems (NET2) abgeleiteten Taktfrequenz angepaßt ist. Dies erfolgt z.B. mit einem Tiefpaßfilter (FIL1) und einem Abtast-Halte-Glied (AH1). In einer Kodiereinheit (K1) findet eine Umsetzung der weiteren zeit- und wertediskreten Signale in digitale Signale statt, deren Bitfolgefrequenz an die Taktfrequenz (f₂) des anderen digitalen Übertragungssystems (NET2) angepaßt ist, wodurch die digitalen Signale im anderen digitalen Übertragungssystem (NET2) übertragbar sind.

## Beschreibung

Die Erfindung betrifft eine Einrichtung und ein Verfahren zum Übertragen von digitalisierten Signalen.

Digitalisierte Signale sind digitale Signale, die aus analogen Signalen wie z.B. Audiosignale hervorgehen, die digitalisiert werden um über ein digitales Übertragungssystem übertragen zu werden. Ein solches digitales Übertragungssystem ist z.B. ein PCM-System (PCM = Pulse Code Modulation), ein PDH-System (PDH = Plesiochrone Digitale Hierarchie) oder ein SDH-System (SDH = Synchrone Digitale Hierarchie).

In dem Buch "Digital Telefony and Network Integration", von B. Keiser und E. Strange, 1985 Van Nostrand Reinhold Company Inc., ISBN 0-442-24659-5 ist auf den Seiten 378 bis 388 beschrieben, wie eine Übertragung von Signalen von einem digitalen Übertragungssystem in ein anderes digitales Übertragungssystem erfolgt. Dazu wird an einer zentralen Stelle und unabhängig von den beiden digitalen Übertragungssystemen ein Mastertakt erzeugt. Beide digitalen Übertragungssysteme werden mit diesem Mastertakt getaktet, wodurch beim Übergang von dem einen zum anderen digitalen Übertragungssystem Taktanpassungsprobleme vermieden werden. Ein Nachteil ist, daß der Mastertakt und seine Übertragung sehr hohen Genauigkeitsanforderungen genügen muß. Ferner ist es ein starres Konzept, da beide digitalen Übertragungssysteme mit dem gleichen Mastertakt arbeiten müssen. Fällt der Mastertakt in einem oder beiden digitalen Übertragungssystemen aus, so sind die digitalen Verbindungen zwischen den beiden digitalen Übertragungssystemen gestört.

Es ist deshalb Aufgabe der Erfindung, Taktanpassungsprobleme beim Übergang von einem digitalen Übertragungssystem auf ein anderes digitales Übertragungssystem zu vermeiden.

Diese Aufgabe wird durch die Lehre der unabhängigen Patentansprüche 1 und 7 gelöst. Vorteilhafte Ausgestaltungen sind den abhängigen Patentansprüchen 2 bis 6 zu entnehmen.

Ein besonderer Vorteil der Erfindung sind autonome digitale Übertragungssysteme mit autonomen Takten.

Im folgenden wird die Erfindung anhand eines Ausführungsbeispiels unter Zuhilfenahme der Figuren 1 bis 2 erläutert. Es zeigen:
- Fig. 1: eine schematische Darstellung einer Einrichtung zum Übertragen von digitalisierten Signalen in Verbindung mit zwei digitalen Übertragungssystemen, und
- Fig. 2: eine schematische Darstellung von fünf Signalen an fünf verschiedenen Punkten der Einrichtung aus Fig. 1.

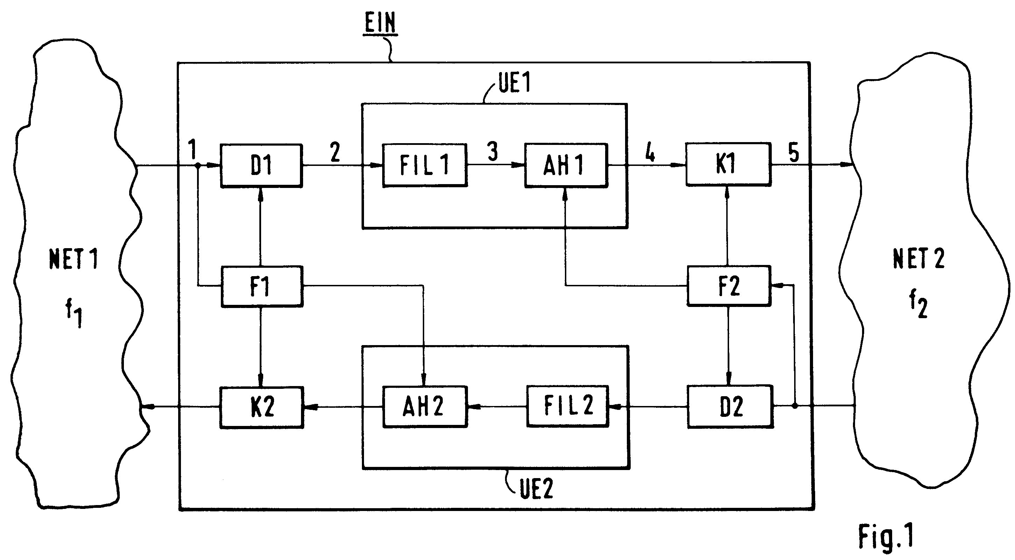

Ein Ausführungsbeispiel der Erfindung wird nun anhand der Figuren 1 bis 2 beschrieben. Fig. 1 zeigt zwei digitale Übertragungssysteme NET1, NET2 und eine Einrichtung EIN zum Übertragen von digitalisierten Signalen.

Das digitale Übertragungssystem NET1 ist z.B. ein PCM-System (PCM = Pulse Code Modulation). Es arbeitet mit der Taktfrequenz f₁.

Das digitale Übertragungssystem NET2 ist z.B. ein SDH-System (SDH = Synchrone Digitale Hierarchie). Es arbeitet mit der Taktfrequenz f₂.

In beiden digitalen Übertragungssystemen NET1, NET2 werden digitalisierte Signale übertragen. Digitalisierte Signale sind digitale Signale, die aus analogen Signalen hervorgehen, die digitalisiert werden. Analoge Signale sind z.B. Telefon-, Audio- oder Videosignale. Um analoge Signale über ein digitales Übertragungssystem NET1, NET2 übertragen zu können, müssen sie digitalisiert werden. Die Digitalisierung erfolgt z.B. über ein Abtast-Halte-Glied und einen Kodierer. Im Abtast-Halte-Glied werden die analogen Signale in zeit- und wertediskrete Signale umgesetzt, die dann im Kodierer in digitale binäre Signale mit einer Bitfolgefrequenz umgesetzt werden, die der Taktfrequenz f₁, f₂ des jeweiligen digitalen Übertragungssystems NET1, NET2 entspricht.

Sollen digitalisierte Signale von einem digitalen Übertragungssystem NET1, NET2 in ein anderes digitales Übertragungssystem NET2, NET1 übertragen werden, und sind die Taktfrequenzen f₁, f₂ der beiden digitalen Übertragungssysteme NET1, NET2 voneinander unterschiedlich, so muß eine Taktanpassung beim Übergang von dem einen NET1, NET2 ins andere NET2, NET1 digitale Übertragungssystem erfolgen.

Die Einrichtung EIN dient dieser Taktanpassung. Für die Übertragung digitalisierter Signale vom digitalen Übertragungssystem NET1 ins digitale Übertragungssystem NET2 beinhaltet die Einrichtung EIN eine Dekodiereinheit D1, eine Umsetzeinheit UE1 und eine Kodiereinheit K1.

Die Dekodiereinheit D1 hat einen Signaleingang, einen Signalausgang und einen Takteingang. In der Dekodiereinheit D1 werden digitale Signale mit einer binären Bitfolge in zeit- und wertediskrete Signale umgesetzt. Je nach Auflösung wird z.B. eine Bitfolge von vier Bit in einen Impuls umgesetzt. Die Wertigkeit der Bits der Bitfolge ist dabei z.B. durch 2³2²2¹2⁰ gegeben. Die Bitfolge 0010 wird somit in einen Impuls mit der Amplitude 2 umgesetzt, die Bitfolge 1001 in einen Impuls mit der Amplitude 9, etc. Die Dekodiereinheit D1 wird mit der Taktfrequenz f₁ des digitalen Übertragungssystems NET1 angesteuert.

Die Umsetzeinheit UE1 hat einen Signaleingang, einen Signalausgang und einen Takteingang. In der Umsetzeinheit UE1 werden zeit- und wertediskrete Signale in zeit- und wertediskrete Signale umgesetzt, deren Impulsfolgefrequenz gegenüber der Impulsfolgefrequenz der Eingangssignale unterschiedlich ist. Des weiteren kann auch die Auflösung, d.h. die Anzahl der möglichen Amplitudenwerte unterschiedlich sein. So beträgt die Impulsfolgefrequenz der Eingangssignale z.B. 4 kHz und die der Ausgangssignale 8 kHz.

Die Umsetzeinheit UE1 beinhaltet einen Tiefpaßfilter FIL1 und ein Abtast-Halte-Glied AH1. Die eingangsseitigen zeit- und wertediskreten Signale werden im Tiefpaßfilter FIL1 gefiltert und dabei in analoge Signale umgesetzt. Die analogen Signale werden dem Abtast-Halte-Glied AH1 zugeführt, in dem sie mit einer Frequenz abgetastet werden, die von der Impulsfolgefrequenz der Eingangssignale unterschiedlich ist. Auf diese Weise entstehen am Ausgang des Abtast-Halte-Glieds AH1 und damit am Ausgang der Umsetzeinheit UE1 zeit- und wertediskrete Signale mit einer Impulsfolgefrequenz, die der Abtastfrequenz entspricht. Die Umsetzeinheit UE1 wird mit der Taktfrequenz f₂ des digitalen Übertragungssystems NET2 angesteuert.

Die Kodiereinheit K1 hat einen Signaleingang, einen Signalausgang und einen Takteingang. Die Funktionsweise der Kodiereinheit K1 ist invers zur Funktionsweise der Dekodiereinheit D1 mit dem Unterschied, daß die Kodiereinheit K1 mit einer anderen Taktfrequenz arbeitet. Die Kodiereinheit wird mit der Taktfrequenz f₂ des digitalen Übertragungssystems NET2 angesteuert.

In der Kodiereinheit K1 werden zeit- und wertediskrete Signale in digitale Signale umgesetzt. Die Amplituden der Impulse der zeit- und wertediskreten Signale werden in binäre Bitfolgen umgesetzt. Je nach Auflösung, z.B. vier Bit mit der Wertigkeit 2³2²2¹2⁰, wird z.B. ein Impuls mit der Amplitude 5 in die Bitfolge 0101 umgesetzt.

Zur Übertragung von digitalisierten Signalen vom digitalen Übertragungssystem NET1 ins digitale Übertragungssystem NET2, werden die zu übertragenden digitalisierten Signale des digitalen Übertragungssystems NET1 zunächst der Dekodiereinheit D1 zugeführt. In der Dekodiereinheit D1 werden die digitalisierten Signale gesteuert mit der Taktfrequenz f₁ des digitalen Übertragungssystems NET1 in zeit- und wertediskrete Signale umgesetzt. Die Impulsfolgefrequenz der zeit- und wertediskreten Signale ist abhängig von der Auflösung. Die Impulsfolgefrequenz ist an eine aus der Taktfrequenz f₁ abgeleiteten Taktfrequenz angepaßt. Die Taktfrequenz f₁ ist ein ganzzahliges Vielfaches der abgeleiteten Taktfrequenz und ein ganzzahliges Vielfaches der Impulsfolgefrequenz. Die zeit- und wertediskreten Signale werden dem Tiefpaßfilter FIL1 zugeführt. Im Tiefpaßfilter FIL1 werden sie in analoge Signale umgesetzt. Die analogen Signale werden dem Abtast-Halte-Glied AH1 zugeführt. Im Abtast-Halte-Glied AH1 werden die analogen Signale gesteuert mit der Taktfrequenz f₂ des digitalen Übertragungssystems NET2 mit einer Abtastfrequenz abgetastet, die abhängig ist von der Auflösung. Die Impulsfolgefrequenz der am Ausgang des Abtast-Halte-Glieds AH1 entstehenden zeit- und wertediskreten Signale ist an eine aus der Taktfrequenz f₂ abgeleiteten Taktfrequenz angepaßt. Die Taktfrequenz f₂ ist ein ganzzahliges Vielfaches der abgeleiteten Taktfrequenz, sowie der Impulsfolgefrequenz. Die abgeleitete Frequenz erhält man z.B. über einen Frequenzteiler. Die zeit- und wertediskreten Signale, die an die abgeleitete Taktfrequenz angepaßt sind, werden der Kodiereinheit K1 zugeführt. In der Kodiereinheit findet eine Umsetzung der zeit- und wertediskreten Signale in digitale Signale statt. Die Umsetzung erfolgt gesteuert mit der Taktfrequenz f₂, wodurch binäre Bitfolgen entstehen, die ins digitale Übertragungssystem NET2 übertragen werden können. Abhängig von der Auflösung wird jeder Impuls der zeit- und wertediskreten Signale gesteuert mit der Taktfrequenz f₂ in eine binäre Bitfolge umgesetzt. Die Bitfolgefrequenz der digitalen Ausgangssignale ist somit an die Taktfrequenz f₂ angepaßt und kann zur Übertragung im digitalen Übertragungssystem NET2 verwendet werden.

Die Dekodiereinheit D1 und das Tiefpaßfilter FIL1 können somit Teil eines Digital/Analog-Umsetzers sein, der mit der Taktfrequenz f₁ angesteuert wird. Das Abtast-Halte-Glied AH1 und die Kodiereinheit K1 können Teil eines Analog/Digital-Umsetzers sein, der mit der Taktfrequenz f₂ angesteuert wird.

Zur Übertragung von digitalisierten Signalen vom digitalen Übertragungssystem NET2 ins digitale Übertragungssystem NET1 beinhaltet die Einrichtung EIN eine Dekodiereinheit D2, eine Umsetzeinheit UE2 und eine Kodiereinheit K2.

Die Dekodiereinheit D2 entspricht der Dekodiereinheit D1 mit dem Unterschied, daß sie mit der Taktfrequenz f₂ des digitalen Übertragungssystems NET2 angesteuert wird.

Die Umsetzeinheit UE2 entspricht der Umsetzeinheit UE1 mit dem Unterschied, daß sie mit der Taktfrequenz f₁ des digitalen Übertragungssystems NET1 angesteuert wird.

Die Kodiereinheit K2 entspricht der Kodiereinheit K1 mit dem Unterschied, daß sie mit der Taktfrequenz f₁ angesteuert wird.

Die Umsetzeinheit UE2 beinhaltet einen Tiefpaßfilter FIL2 und ein Abtast-Halte-Glied AH2. Das Abtast-Halte-Glied AH2 wird mit der Taktfrequenz f₁ angesteuert.

Bei der Übertragung von digitalisierten Signalen vom digitalen Übertragungssystem NET2 ins digitale Übertragungssystem NET1 werden die zu übertragenden digitalisierten Signale in der Dekodiereinheit D2 in zeit- und wertediskrete Signale umgesetzt, die dem Tiefpaßfilter FIL2 zugeführt und dort in analoge Signale umgesetzt werden. Die analogen Signale werden im Abtast-Halte-Glied AH2 abgetastet, wodurch zeit- und wertediskrete Signale entstehen, deren Impulsfolgefrequenz an eine aus der Taktfrequenz f₁ des digitalen Übertragungssystems NET1 abgeleiteten Taktfrequenz angepaßt ist. Die zeit- und wertediskreten Signale werden in der Kodiereinheit K2 in digitale Signale umgesetzt, deren Bitfolgefrequenz an die Taktfrequenz f₁ angepaßt ist, wodurch eine Übertragung im digitalen Übertragungssystem NET1 möglich ist. Die Übertragung von digitalisierten Signalen vom digitalen Übertragungssystem NET2 ins digitale Übertragungssystem NET1 erfolgt somit auf die gleiche Art und Weise wie die Übertragung von digitalisierten Signalen vom digitalen Übertragungssystem NET1 ins digitale Übertragungssystem NET2.

Die analogen Signale erhält man aus den digitalen Signalen zurück, in dem man im digitalen Übertragungssystem NET1 z.B. eine mit der Taktfrequenz f₁ gesteuerte Dekodiereinheit D1 mit nachgeschaltetem Tiefpaßfilter FIL1 und im digitalen Übertragungssystem NET2 eine mit der Taktfrequenz f₂ gesteuerte Dekodiereinheit D2 mit nachgeschaltetem Tiefpaßfilter FIL2 verwendet.

Die Einrichtung EIN beinhaltet des weiteren eine Taktrückgewinnungseinheit F1 und eine Taktrückgewinnungseinheit F2. Die Taktrückgewinnungseinheiten F1 und F2 sind gleich aufgebaut und dienen der Taktrückgewinnung aus einem digitalen Signal. Sie haben jeweils einen Eingang und drei Ausgänge.

Die Taktrückgewinnungseinheit F1 ist eingangsseitig mit dem Signaleingang der Dekodiereinheit D1 und ausgangsseitig mit den Takteingängen der Dekodiereinheit D1, der Kodiereinheit K2 und des Abtast-Halte-Glieds AH2 verbunden. In die Taktrückgewinnungseinheit F1 wird aus den digitalisierten Signalen des Übertragungssystems NET1 die Taktfrequenz f₁ zurückgewonnen und die Dekodiereinheit D1, die Kodiereinheit K2 und das Abtast-Halte-Glied AH2 damit gesteuert.

Die Taktrückgewinnungseinheit F2 ist eingangsseitig mit dem Signaleingang der Dekodiereinheit D2 und ausgangsseitig mit den Takteingängen der Dekodiereinheit D2, der Kodiereinheit K1 und des Abtast-Halte-Glieds AH1 verbunden. In der Taktrückgewinnungseinheit F2 wird aus den digitalisierten Signalen des Übertragungssystems NET2 die Taktfrequenz f₂ zurückgewonnen und die Dekodiereinheit D2, die Kodiereinheit K1 und das Abtast-Halte-Glied AH1 damit umgesteuert.

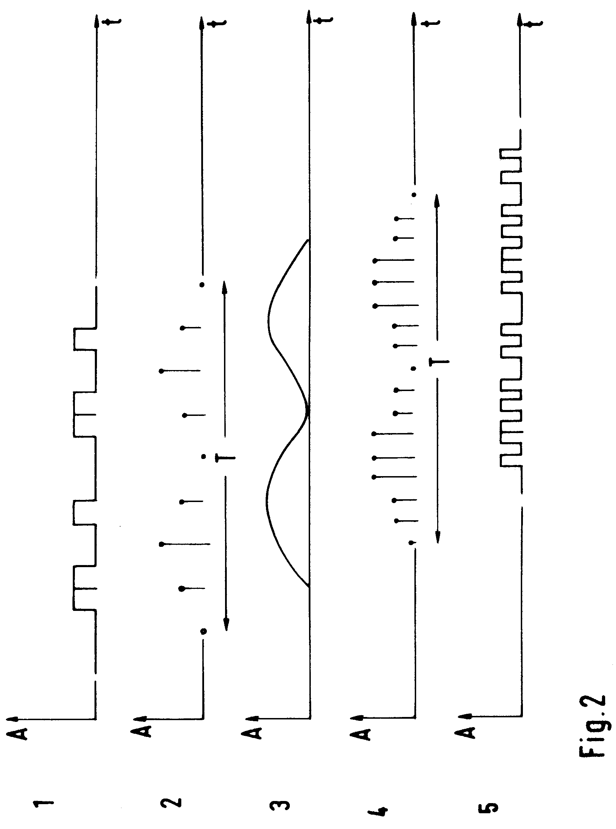

Fig. 2 zeigt fünf Signale an fünf verschiedenen Punkten der Einrichtung EIN aus Fig. 1.

Signal 1 ist eine binäre Bitfolge, die am Signaleingang der Dekodiereinheit D1 anliegt. Das Signal 1 stellt ein digitalisiertes Signal des digitalen Übertragungssystems NET1 dar. Die Bitfolgefrequenz ist gleich der Taktfrequenz f₁.

Das Signal 2 ist ein zeit- und wertediskretes Signal mit quantisierten Amplitudenwerten A zu äquidistanten Zeitpunkten t. Das Signal 2 liegt am Signalausgang der Dekodiereinheit D1, am Signaleingang der Umsetzeinheit UE1 und am Signaleingang des Tiefpaßfiiters FIL1 an; es entsteht aus dem Signal 1.

Das Signal 3 ist ein analoges Signal, welches am Signalausgang des Tiefpaßfilters FIL1 und am Signaleingang des Abtast-Halte-Glieds AH1 anliegt. Es entsteht aus dem Signal 2.

Das Signal 4 ist wie das Signal 2 ein zeit- und wertediskretes Signal. Im Gegensatz zu Signal 2 hat das Signal 4 mehr quantisierte Amplitudenwerte A und mehr äquidistante Zeitpunkte t im gleichen Zeitfenster T. Das Signal 4 entsteht aus dem Signal 3. Im dargestellten Fall ist die Taktfrequenz f₂ höher als die Taktfrequenz f₁.

Das Signal 5 liegt am Signalausgang des Kodierers K1 an. Es ist eine binäre Bitfolge mit der Bitfolgefrequenz gleich der Taktfrequenz f₂ und stellt ein digitales Signal dar, das im digitalen Übertragungssystem NET2 übertragen werden kann. Das Signal 5 entsteht aus dem Signal 4.

In dem Ausführungsbeispiel beinhaltet die Umsetzeinheit UE1 ein Tiefpaßfilter FIL1 und ein Abtast-Halte-Glied AH1. Zur Umsetzung eines zeit- und wertediskreten Signals in ein zeit- und wertediskretes Signal mit einer anderen Impulsfolgefrequenz kann anstelle des Tiefpaßfilters FIL1 und des Abtast-Halte-Glieds AH1 auch eine Recheneinheit, wie z.B. ein Mikroprozessor µP oder ein digitaler Signalprozessor DSP verwendet werden. Die Amplitudenwerte der Impulse des Ausgangssignals werden aus dem Eingangssignal auf folgende Weise ermittelt:

### 1. durch lineare Interpolation:

Die Abtastzeitpunkte der Ausgangsimpulse werden durch einen mit der Taktfrequenz f₂ angesteuerten und von der Auflösung abhängig eingestellten Frequenzteiler bei jeder steigenden oder fallenden Flanke des Ausgangstaktes des Frequenzteilers bestimmt. Zu jedem Abtastzeitpunkt des Ausgangssignals werden die beiden nächstliegenden Abtastzeitpunkte des Eingangssignals bestimmt. Die Amplitudenwerte der Impulse an diesen beiden Abtastzeitpunkten werden addiert und anschließend durch zwei dividiert. Das Ergebnis wird mit den durch die Auflösung bestimmten möglichen quantisierten Amplitudenwerten des Ausgangssignals verglichen. Der dem Ergebnis nächstliegende Amplitudenwert bildet den Amplitudenwert für den Ausgangsimpuls zum jeweiligen Abtastzeitpunkt oder alternativ

### 2. mittels digitaler Tiefpaßfilterung:

In der Recheneinheit wird eine Hilfstaktfrequenz erzeugt, die ein ganzzahliges Vielfaches, z.B. n-faches (mit n = 10 bis 100) der Taktfrequenz f₁ ist. Aus dem Eingangssignal mit der Taktfrequenz f₁ wird ein Signal mit der Hilfstaktfrequenz erzeugt, in dem zu jedem Abtastzeitpunkt t₁ mit dem Abtastwert A₁ n Abtastwerte der Amplitude des Abtastwertes A₁ zu n aufeinanderfolgenden Abtastzeitpunkten der Hilfstaktfrequenz erzeugt werden. Das so gewonnene Signal mit der Hilfstaktfrequenz wird in einem digitalen Tiefpaß geglättet und anschließend die Impulse des Ausgangssignals erzeugt, in dem zu den Abtastzeitpunkten entsprechend der Taktfrequenz f₂ die benachbarten Abtastzeitpunkte der Hilfstaktfrequenz mit den geglätteten Abtastwerten verwendet werden. Die Taktfrequenz f₂ ist dabei kleiner als die Hilfstaktfrequenz.

Die Umsetzeinheit UE2 kann vergleichbar zur Umsetzeinheit UE1 ebenfalls mit einer Recheneinheit anstelle des Tiefpaßfilters FIL2 und des Abtast-Halte-Glieds AH2 realisiert sein.

Des weiteren sind alle Elemente der Einrichtung EIN auf einer integrierten Schaltung realisierbar, so daß die gesamte Einrichtung EIN als integrierte Schaltung ausgeführt sein kann.

## Patentansprüche

1. Einrichtung (EIN) zum Übertragen von digitalisierten Signalen von einem ersten digitalen Übertragungssystem (NET1) in ein zweites digitales Übertragungssystem (NET2), die mit unterschiedlichen Taktfrequenzen (f₁, f₂) arbeiten, mit einer Dekodiereinheit (D1), einer Umsetzeinheit (UE1) und einer Kodiereinheit (K1), bei der die Dekodiereinheit (D1) mit der Taktfrequenz (f₁) des ersten digitalen Übertragungssystems (NET1) ansteuerbar ist, bei der die Umsetzeinheit (UE1) und die Kodiereinheit (K1) mit der Taktfrequenz (f₂) des zweiten digitalen Übertragungssystems (NET2) ansteuerbar sind,
bei der die digitalisierten Signale des ersten digitalen Übertragungssystems (NET1) in der Dekodiereinheit (D1) in zeit- und wertediskrete Signale umsetzbar sind,
bei der die zeit- und wertediskreten Signale in der Umsetzeinheit (UE1) in weitere zeit- und wertediskrete Signale umsetzbar sind, deren Impulsfolgefrequenz an eine aus der Taktfrequenz (f₂) des zweiten digitalen Übertragungssystems (NET2) abgeleiteten Taktfrequenz angepaßt ist, und
bei der die weiteren zeit- und wertediskreten Signale in der Kodiereinheit (K1) in digitale Signale umsetzbar sind, deren Bitfolgefrequenz an die Taktfrequenz (f₂) des zweiten digitalen Übertragungssystems (NET2) angepaßt ist.

2. Einrichtung (EIN) nach Anspruch 1,
**dadurch gekennzeichnet,** daß die Einrichtung (EIN) eine weitere Dekodiereinheit (D2), eine weitere Umsetzeinheit (UE2) und eine weitere Kodiereinheit (K2) zum Übertragen von digitalisierten Signalen vom zweiten digitalen Übertragungssystem (NET2) ins erste digitale Übertragungssystem (NET1) beinhaltet, daß die weitere Dekodiereinheit (D2) mit der Taktfrequenz (f₂) des zweiten digitalen Übertragungssystems (NET2) ansteuerbar ist, daß die weitere Umsetzeinheit (UE2) und die weitere Kodiereinheit (K2) mit der Taktfrequenz (f₁) des ersten digitalen Übertragungssystems (NET1) ansteuerbar ist,
daß die digitalisierten Signale des zweiten digitalen Übertragungssystems (NET2) in der weiteren Dekodiereinheit (D2) in zeit- und wertediskrete Signale umsetzbar sind,
daß die zeit- und wertediskreten Signale in der weiteren Umsetzeinheit (UE2) in weitere zeit- und wertediskrete Signale umsetzbar sind, deren Impulsfrequenz an die Taktfrequenz (f₁) des ersten digitalen Übertragungssystems (NET1) angepaßt ist, und daß die weiteren zeit- und wertediskreten Signale in der weiteren Kodiereinheit (K2) in digitale Signale umsetzbar sind, deren Bitfolgefrequenz an die Taktfrequenz (f₁) des ersten digitalen Übertragungssystems (NET1) angepaßt ist.

3. Einrichtung (EIN) nach Anspruch 2, dadurch gekennzeichnet, daß die Einrichtung (EIN) eine erste Taktrückgewinnungseinheit (F1) und eine zweite Taktrückgewinnungseinheit (F2) beinhaltet,
daß in der ersten Taktrückgewinnungseinheit (F1) aus den digitalisierten Signalen des ersten digitalen Übertragungssystems (NET1) die Taktfrequenz (f₁) des ersten digitalen Übertragungssystems (NET1) zurückgewonnen werden kann,
daß in der zweiten Taktrückgewinnungseinheit (F2) aus den digitalisierten Signalen des zweiten digitalen Übertragungssystems (NET2) die Taktfrequenz (f₂) des zweiten digitalisierten Übertragungssystems (NET2) zurückgewonnen werden kann,
daß die Dekodiereinheit (D1), die weitere Kodiereinheit (K2) und die weitere Umsetzeinheit (UE2) von der ersten Taktrückgewinnungseinheit (F1) ansteuerbar sind, und
daß die weitere Dekodiereinheit (D2), die Kodiereinheit (K1) und die Umsetzeinheit (UE1) von der zweiten Taktrückgewinnungseinheit (F2) ansteuerbar sind.

4. Einrichtung (EIN) nach Anspruch 1, dadurch gekennzeichnet, daß die Umsetzeinheit (UE1) bin Tiefpaßfilter (FIL1) und ein Abtast-Halte-Glied (AH1) beinhaltet,
daß die zeit- und wertediskreten Signale im Tiefpaßfilter (FIL1) in analoge Signale umsetzbar sind, und
daß die analogen Signale im Abtast-Halte-Glied (AH1) in die weiteren zeit- und wertediskreten Signale umsetzbar sind.

5. Einrichtung (EIN) nach Anspruch 4, dadurch gekennzeichnet, daß die Dekodiereinheit (D1) und das Tiefpaßfilter (FIL1) Teil eines Digital/Analog-Umsetzers sind, und daß das Abtast-Halte-Glied (AH1) und die Kodiereinheit (K1) Teil eines Analog/Digital-Umsetzers sind.

6. Einrichtung (EIN) nach Anspruch 1, dadurch gekennzeichnet, daß die Umsetzeinheit (UE1) eine Recheneinheit (µP, DSP) beinhaltet.

7. Einrichtung (EIN) nach Anspruch 1, dadurch gekennzeichnet, daß die Einrichtung (EIN) als integrierte Schaltung ausgeführt ist.

8. Verfahren zum Übertragen von digitalisierten Signalen von einem ersten digitalen Übertragungssystem (NET1) in ein zweites digitales Übertragungssystem (NET2), die mit unterschiedlichen Taktfrequenzen (f₁, f₂) arbeiten
bei dem die digitalisierten Signale des ersten digitalen Übertragungssystems (NET1) gesteuert mit einer aus der Taktfrequenz (f₁) des ersten digitalen Übertragungssystems (NET1) abgeleiteten Taktfrequenz in zeit- und wertediskrete Signale umgesetzt werden,
bei dem die zeit- und wertediskreten Signale gesteuert mit einer aus der Taktfrequenz (f₂) des zweiten digitalen Übertragungssystems (NET2) abgeleiteten Taktfrequenz in weitere zeit- und wertediskrete Signale umgesetzt werden, deren Impulsfolgefrequenz an die abgeleitete Taktfrequenz (f₂) des zweiten digitalen Übertragungssystems (NET2) angepaßt ist, und
bei dem die weiteren zeit- und wertediskreten Signale gesteuert mit der Taktfrequenz (f₂) des zweiten digitalen Übertragungssystems (NET2) in digitale Signale umgesetzt werden, deren Bitfolgefrequenz an die Taktfrequenz (f₂) des zweiten digitalen Übertragungssystems (NET2) angepaßt ist.
